# FASCICULE DE BREVET EUROPEEN

(11) **EP 0 790 695 B1**
(45) Date de publication et mention de la délivrance du brevet: **25.10.2000**
(21) Numéro de dépôt: 97400333.7
(22) Date de dépôt: 14.02.1997
(51) Int. Cl.: H02K 21/12

(54) **Machine dynamo-électrique à réluctance variable hybride et procédé de fabrication et de calcul**
Hybride, dynamoelektrische Maschine mit variabler Reluktanz und Herstellungs- und Berechnungsverfahren
Hybrid dynamo-electric variable reluctance machine and manufacturing and calculation method

(30) Priorité: 14.02.1996 FR 9601784
(43) Date de publication de la demande: 20.08.1997
(73) Titulaire: KOEHLER, Gérard, F-92410 Ville-d'Avray (FR)
(72) Inventeur: KOEHLER, Gérard, F-92410 Ville-d'Avray (FR)
(74) Mandataire: Pontet, Bernard

(56) Documents cités:
- EP-A- 0 155 877
- EP-A- 0 677 914
- WO-A-91/20120
- WO-A-94/06198
- DE-A- 2 923 052
- FR-A- 2 685 566
- US-A- 5 365 137
- US-A- 5 475 277
- DATABASE INSPEC INSTITUTE OF ELECTRICAL ENGINEERS, STEVENAGE, GB Inspec No. an5288237, XP002031329 & 10th Conference on Computation of Electromagnetic Fields (COMPUMAG'95), Berlin, DE, 10-13 July 1995 & IEEE TRANSACTIONS ON MAGNETICS, vol. 32, no. 3, Mai 1996, pages 1086-1089, XP000609583 SADOWSKI ET AL.:

## Description

La présente invention concerne une machine dynamo-électrique à réluctance variable, telle qu'un moteur ou un générateur, constituée par un organe statorique et un organe mobile se déplaçant l'un par rapport à l'autre selon une direction de déplacement **X**, un premier de ces organes comprenant au moins un premier circuit magnétique comportant au moins un groupe de **q** arceaux qui sont disposés dans des plans transversaux à la direction de déplacement **X**, se succèdent dans la direction de déplacement **X** et ont chacun deux bras terminés par deux premiers pôles saillants à pas constant excités par des bobines, le second des organes comprenant un second circuit magnétique comportant des seconds pôles à pas constant définissant avec les premiers pôles deux rangées d'entrefers

Une telle disposition est décrite dans le WO 92/00628 qui concerne une machine tournante angulairement homophasée et axialement hétéropolaire dont le nombre de premiers pôles (statoriques selon ce document) est égal au nombre de seconds pôles (rotoriques selon ce document).

Il est cependant intéressant de bénéficier d'un effet Vernier dans une disposition telle que celle décrite dans le EP 0 711 024 Al qui a été déposé par le demandeur le 23-10-95.

Les principaux avantages de l'ensemble de ces dispositions concernent les réluctances de fer et d'entrefer, le bobinage, la fabrication et les nouvelles possibilités d'utilisation (grand diamètre, organe d'utilisation logé à l'intérieur du moteur, fort couple de démarrage).

Il serait d'autre part intéressant de bénéficier de certains des avantages des moteurs hybrides à aimants permanents, à savoir:
- Présence d'aimants permanents pour économiser des ampèretours.
- Présence d'un couple à l'arrêt sans excitation.
- Fer travaillant deux fois par cycle avec une excitation en double alternance en mettant à profit les faibles pertes par hystérésis d'un fer performant, ce qui permet d'augmenter la puissance massique par rapport à une excitation en simple alternance.
- Suppression de la difficulté de coupure brusque d'un courant continu.
- Diminution du bruit de fonctionnement de la machine par suite des variations moins brusques de flux et de forces.
- Possibilité de "défluxage" par transfert de flux des aimants permanents dans la direction du déplacement pour fonctionnement à vitesse élevée, comme cela est décrit dans l'article: "MOTEUR DE BROCHE" de J.J.Urgell Revue technique GEC ALSTHOM N°6-1991.

Le but de la présente invention est de bénéficier des caractéristiques avantageuses ci-dessus sans être limité à une forme d'entrefer ou à un type de déplacement.

Le EP 454183 A décrit une machine à réluctance variable à effet Vernier (entre groupes de pôles homophasés pour diminuer les effets néfastes des couplages entre phases) dans laquelle on a introduit des aimants permanents rotoriques. Cependant cette machine ne bénéficie pas des avantages du EP 0 711 024 car elle est axialement homopolaire. De plus elle ne bénéficie pas non plus des avantages d'une excitation en double alternance.

Suivant l'invention, chaque arceau est excité en double alternance par une bobine avec un déphasage de **π+2π/q** relativement à un arceau immédiatement précédent le long de la direction de déplacement **X**, l'un au moins des nombres **q** d'arceaux par groupe et **g** de groupes d'arceaux ainsi hétérophasés est pair, le rapport entre les pas des premiers et seconds pôles est égal à l'unité augmenté d'un nombre pair **n** lui même divisé par le nombre **q** de phases, soit **1+n/q** et des aimants permanents polarisent avec des polarités magnétiques opposées chaque pôle d'une paire de seconds pôles ayant une même cote dans la direction de déplacement **X**, les polarités magnétiques de deux seconds pôles voisins d'une même rangée d'entrefers étant également opposées.

Le déphasage de **π+2π/q** entre les excitations de deux arceaux voisins est de préférence réalisé en cumulant un déphasage électrique entre phases voisines avec un déphasage de π obtenu par l'inversion du sens de bobinage de chaque bobine par rapport aux deux bobines qui lui sont voisines le long de la direction de déplacement **X**.

De préférence le nombre **n** est positif et égal à 2.

Les seconds pôles ont de préférence chacun une longueur dans la direction de déplacement **X** au moins égale à celle d'un creux de denture entre deux premiers pôles de façon à faciliter pour certaines positions angulaires de l'organe mobile un transfert de flux au niveau des entrefers dans la direction de déplacement **X** entre éléments de circuits magnétiques voisins.

Dans une première structure, l'organe mobile se déplace par rotation autour d'une deuxième direction **Z** qui est axiale et orthogonale à la direction de déplacement **X**, les premiers et seconds pôles sont saillants dans une troisième direction **Y** qui est radiale et orthogonale aux deux autres directions et les rangées d'entrefers ont une forme cylindrique et sont situées à des cotes différentes dans la deuxième direction **Z**, la machine étant ainsi axialement hétéropolaire.

Les arceaux peuvent être assemblés dans une première couronne telle que statorique et les seconds pôles dans une seconde couronne telle que rotorique.

Dans une première disposition, les aimants permanents ont une direction d'aimantation sensiblement parallèle à la direction selon laquelle se succèdent les rangées d'entrefers et leurs surfaces polaires sont recouvertes par des pièces polaires en forme de demi-arceau.

Dans une deuxième disposition, les aimants permanents ont une direction d'aimantation transversale à la direction de déplacement et à la direction selon laquelle se succèdent les rangées d'entrefers.

Une face avant de tels aimants joue le rôle de surface d'entrefer et leur face arrière est magnétiquement reliée à la surface homologue de l'aimant permanent ayant même cote le long de la direction de déplacement **X**.

Pour une machine rotative, la direction d'aimantation peut être radiale et les aimants ont alors une forme en tuile.

De préférence, des bras voisins de deux arceaux ayant même cote dans la direction **X** sont entourés par une même bobine.

Dans une deuxième structure à mouvement de rotation, le premier organe comprend deux premiers circuits magnétiques symétriques et concentriques se faisant radialement face entre lesquels est situé le second circuit magnétique à aimantation radiale. Les deux faces de chaque aimant permanent radial en forme de tuile jouent alors chacune le rôle de surface d'entrefer avec l'un respectif des premiers circuits magnétiques.

Dans une troisième structure, le premier organe comprend également deux premiers circuits magnétiques symétriques, mais qui se font axialement face et entre lesquels est situé le second circuit magnétique constitué par des aimants permanents, les quatre entrefers d'un circuit magnétique élémentaire étant plans.

Une quatrième structure, semblable à la précédente, concerne un moteur linéaire.

L'invention concerne aussi un moyen de réfrigération, un exemple d'application ainsi que des procédés de surmoulage et de calcul avec optimisation des performances de la machine.

Les particularités et avantages de l'invention apparaîtront dans la description ci-après.

Dans la suite, on considérera que le premier organe est un organe statorique que l'on nommera "stator" et que le deuxième organe est un organe mobile que l'on nommera "rotor" pour les machines tournantes et "curseur" pour les machines linéaires.

Aux dessins annexés, donnés à titre non limitatif:
la figure 1 est une coupe partielle I-I de la figure 3, perpendiculaire à la direction axiale **Z** d'une machine tournante suivant l'invention, conforme à la première structure, avec la disposition à aimantation axiale des aimants permanents et avec un rotor extérieur;
la figure 2 est la coupe II limitée de la figure 1;
la figure 3 est la coupe III-III de la figure 1;
la figure 4 est une vue en perspective d'un arceau rotorique à aimantation radiale en face d'un arceau statorique avec une représentation partielle d'arceaux voisins;
la figure 5 est un diagramme de fonctionnement de la machine après un double redressement de courbure;
la figure 6 représente schématiquement une machine à deux circuits magnétiques statoriques à entrefers cylindriques suivant la deuxième structure;
la figure 7 représente schématiquement une machine à entrefers plans à mouvement de rotation ou de translation suivant la troisième ou la quatrième structure;
la figure 8 est la coupe schématique d'un groupe motopropulseur thermique d'un véhicule, équipé d'une machine suivant l'invention et
la figure 9 représente une machine à deux ensembles moteurs.

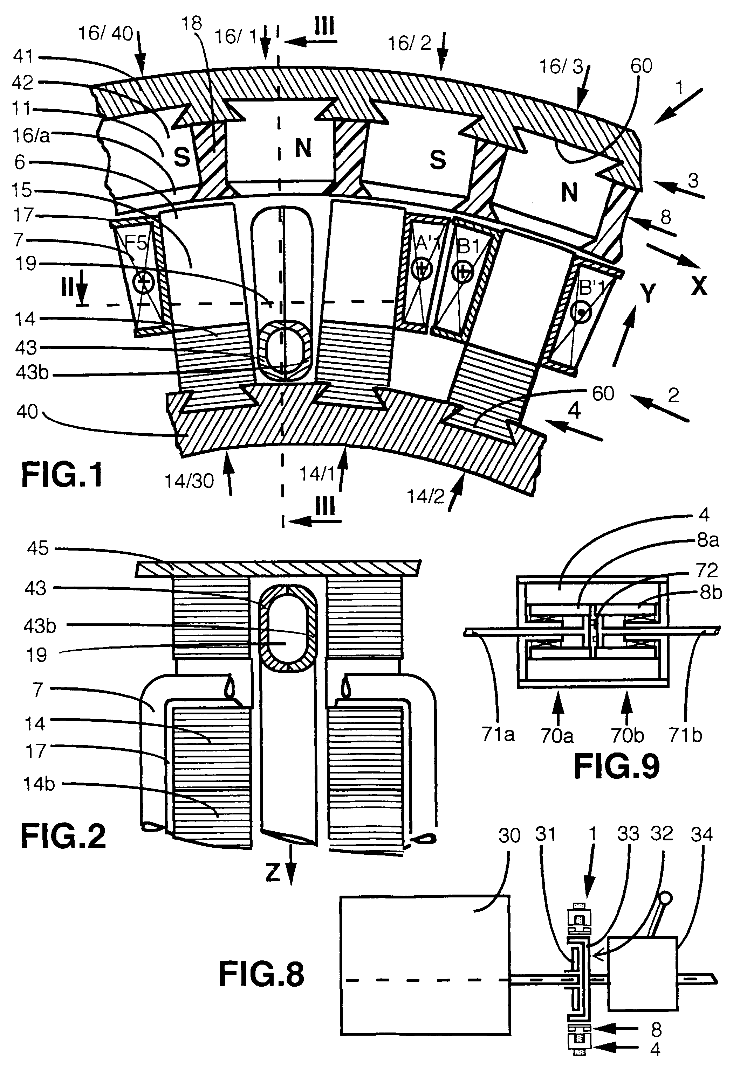

Dans la configuration de la première structure, sur les figures 1 à 3, la machine 1 est constituée par un stator 2 et par un rotor 3 ayant pour rotation une première direction de déplacement circonférentielle X, par rapport au stator supposé fixe, le mouvement de rotation ayant un axe dans une deuxième direction z qui est donc ici axiale. Le rotor 3 est ici extérieur au stator 2 dans une troisième direction Y qui est radiale, chacune de ces trois directions étant orthogonale aux autres .

Le stator 2 comprend un circuit magnétique statorique 4 constitué par un assemblage dans la direction X d'arceaux statoriques 14 disposés chacun dans un plan perpendiculaire à la direction X sur une couronne 40. Chaque arceau 14 a, dans la direction Y, deux bras 15 à même calage angulaire autour de l'axe Z et terminés chacun par un pôle 6,6b saillant radialement vers le rotor. Ces arceaux sont positionnés sur la face extérieure de la couronne statorique 40.

Le rotor 3 comprend un circuit magnétique rotorique 8 constitué par un assemblage dans la direction X d'arceaux rotoriques 16 disposés chacun dans un plan perpendiculaire à la direction X sur une couronne rotorique 41. Dans la direction Y, chaque arceau 16 possède deux pôles 11, 11b à même calage angulaire X orientés axialement vers le stator. Un pôle rotorique 11 est constitué par une première extrémité d'un demi-arceau rotorique 16/a ou 16/b, les deuxièmes extrémités de deux demi-arceaux 16/a et 16/b de chaque arceau 16 enserrant un aimant permanent respectif 42 à aimantation sensiblement axiale **Z**, contrairement à l'aimantation orientée tangentiellement que l'on connait pour les aimants permanents dits "enterrés" des moteurs synchrones axialement homopolaires. Chaque arceau 16 est donc constitué par l'ensemble 16/a,42 et 16/b fixé sur la face intérieure d'une couronne rotorique 41.

Les paires de pôles statoriques 6,6b et rotoriques 11, 11b définissent entre eux deux rangées cylindriques 12 et 12b d'entrefers espacées selon la direction axiales **Z**, rendant la machine axialement hétéropolaire.

Les arceaux statoriques et demi-arceaux rotoriques sont constitués chacun par un empilage de bandes de tôles cintrées suivant différents rayons autour d'axes de cintrage dont la direction est transversale à l'axe d'orientation des grains et à la direction axiale **Z** c'est à dire sensiblement parallèle à la direction **X**. Ces arceaux proviennent de préférence du sectionnement d'un tore enroulé et collé à partir d'une bande de tôle magnétique mince à grains orientés.

La réalisation de la figure 1 comporte 30 arceaux statoriques 14 dont seulement 3 sont représentés et repérés de 14/30 à 14/2 ainsi que 40 arceaux rotoriques 16 dont seulement 4 sont représentés et repérés de 16/40 à 16/3.

Dans chaque rangée d'entrefers, les pôles statoriques 6 sont régulièrement répartis autour de l'axe **Z**, de même que pour les pôles rotoriques 11.

Les 30 arceaux statoriques 14 sont décomposés en un nombre **g** de groupes de **q** arceaux avec ici 5 groupes de chacun 6 arceaux successifs à calage angulaire croissant relativement à la direction **X**, excités chacun par une bobine 7 d'une des **q** phases. Il y a donc autant de phases que d'arceaux dans chaque groupe.

A la figure 1, les sections des bobines sont repérées de F5 à B'1, les sections F'5 et A1 n'étant pas représentées. Les bobines 7 sont bobinées sur une carcasse 17.

L'excitation est faite en double alternance à partir d'un réseau alternatif polyphasé. Les sens de bobinage des bobines qui se succèdent le long de la direction de déplacement **X** sont alternés d'une bobine à sa voisine, comme symbolisé par une croix ou un point dans un cercle.

En outre, relativement à un sens de déplacement le long de la direction de déplacement **X**, chaque bobine 7 est alimentée par une phase choisie pour avoir un déphasage électrique de **2π/q** par rapport à la bobine précédente. Le déphasage d'excitation de chaque arceau par rapport au précédent cumule le déphasage électrique et celui π dû à l'alternance du sens de bobinage. Il est donc égal à **2π/q+π**. Les arceaux d'un groupe sont donc hétérophasés.

Chaque aimant permanent 42 produit sur les rangées d'entrefers 12 et 12b des polarités opposées. En outre, les polarités de deux aimants permanents angulairement voisins, repérés par les lettres N et S, donc qui se suivent le long de la direction de déplacement **X**, sont également opposées.

Pour retrouver le bon sens d'excitation tout le long du périmètre de l'élément statorique, il faut que le nombre d'arceaux 14 soit pair c'est à dire que l'un au moins des nombres **q** et **g** soit pair.

Dans les réalisations habituelles des machines à effet Vernier, dans un groupe de **g** pôles statoriques hétérophasés, il y a au rotor un pôle de plus ou de moins qu'au stator. Cependant, dans le cas de la machine suivant l'invention et avec un mouvement de rotation, cette disposition conduirait à inverser d'un groupe à l'autre les polarités respectives des aimants permanents par rapport aux ampèretours, provoquant des forces antagonistes d'un groupe à l'autre. Pour supprimer ce défaut, il faut qu'il y ait un nombre pair **n** d'arceaux rotoriques de plus ou de moins dans chacun des groupes de **q** arceaux statoriques 14 hétérophasés, avec **n** pair positif ou négatif.

Pour réaliser cette condition, il faut que le rapport entre les pas statorique et rotorique soit égal à l'unité augmenté du nombre pair **n** divisé lui-même par le nombre de phases **q**, soit **1+n/q**

Avec **n**=2, le nombre d'arceaux rotoriques est bien de 6x5+2x5=40.

Avec une distribution progressive des phases sur les arceaux 14, le déphasage entre les courants d'excitation de deux pôles 6 voisins dans la direction **X** est de **2π/q**, donnant des ampèretours de même direction en dehors des instants d'inversion de courant. Or comme les polarités des pôles rotoriques 11 s'inversent d'un pôle à son voisin, il faut que les déphasages entre pôles 6 voisins soient augmentés d'une demi-période, c'est à dire que le déphasage total soit de **π+2π/q**. On a vu ci dessus que cette condition est réalisée grâce à l'inversion du sens de bobinage d'une bobine 7 telle que A par rapport à sa voisine B.

Pour réaliser la condition d'alternance angulaire des polarités magnétiques des pôles 11, il faut que le nombre d'arceaux 16 soit pair, ce qui est réalisé quel que soit **g** du fait que **n** et le nombre d'arceaux 14 sont pairs.

On a choisi **n**=2 de façon à faciliter l'obtention d'une longueur dans la direction **X** d'un pôle rotorique 11 au moins sensiblement égale à celle d'un creux de denture entre deux pôles statoriques 6, pour des motifs exposés ultérieurement. On peut aussi avoir **n**=4 avec un grand nombre de phases **q** ou **n**=0 pour un générateur monophasé par couronne statorique.

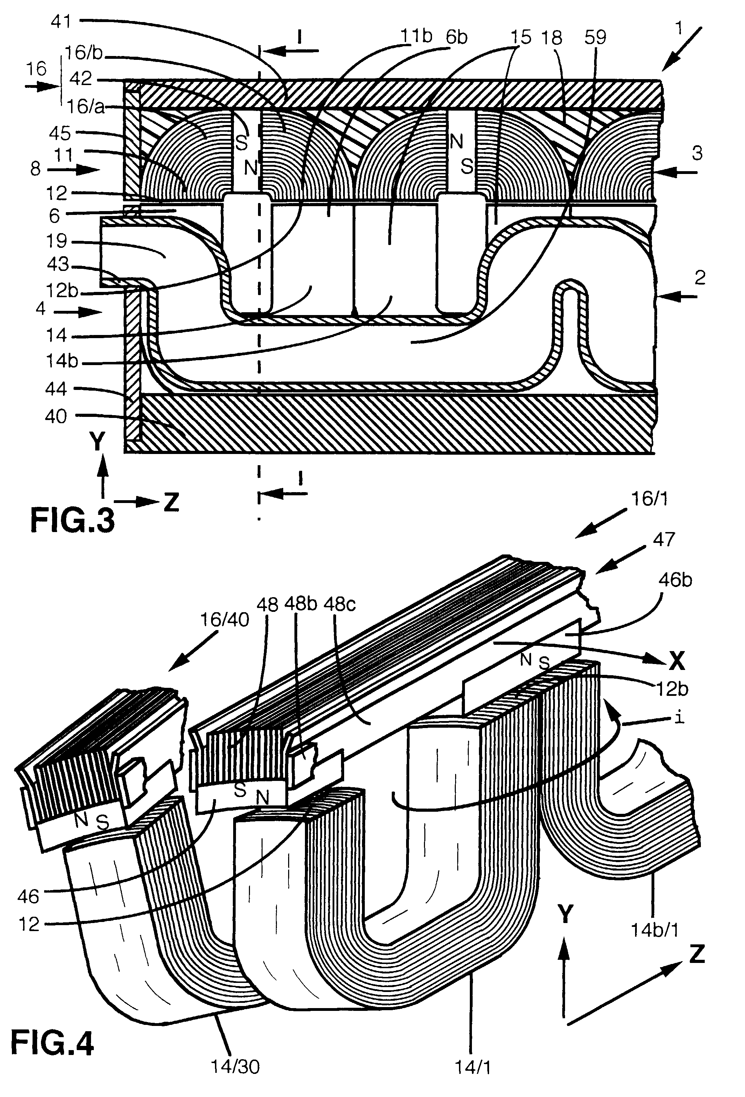

Sur la figure 3, on a représenté dans la direction axiale **Z** plusieurs ensembles modulaires d'arceaux statoriques et rotoriques dans les couronnes 40 et 41. La construction peut donc être axialement modulaire. Elle peut aussi être diamétralement modulaire à peu de frais d'investissement en modifiant le nombre d'arceaux par couronne en fonction du diamètre choisi pour les couronnes.

On voit que deux bras 15 voisins d'arceaux statoriques 14 et 14b à même calage angulaire, formant ensemble un circuit magnétique élémentaire en forme de **E**, peuvent être excités par une même bobine 7 autour de la barre centrale du **E**.

Sur les figures 1 à 3, on voit que des conduits 19 traversent le circuit magnétique statorique 4 chacun à proximité de l'emplacement des bobines 7 entre deux circuits magnétiques élémentaires en **E** angulairement voisins de façon à permettre la circulation d'un fluide de réfrigération.

Chaque conduit 19 est de préférence constitué par l'assemblage de deux demi-coquilles 43 et 43b symétriques (seul le conduit entre les arceaux 14/30 et 14/1 est représenté).

Chaque conduit 19 s'étend globalement dans un plan transversal à la direction **X**. Le parcours d'un conduit 19 commence ici par un emmanchement dans une ouverture d'une première face latérale 44 terminant la couronne 40, au voisinage d'une rangée d'entrefers 12, suivi d'un trajet radial entre bobines 7 et bras d'arceaux 14, suivi d'un trajet axial le long de la couronne 40, suivi d'un nouveau trajet radial entre bobines 7 et bras d'arceaux 14b, les deux trajets radiaux et le trajet axial formant ensemble un lobe 59 (figure 3) contournant les deux bobines adjacentes (F'5 et Al non représentées) par le côté de ces bobines qui est opposé aux entrefers. Ce lobe est suivi soit d'un nouveau parcours identique dans d'autres ensembles modulaires statoriques axialement voisins, soit d'un trajet axial débouchant dans une ouverture de la deuxième face latérale de la couronne 40.

Les arceaux sont entaillés à leurs bases et les couronnes 40 et 41 sont mortaisées de façon à permettre un assemblage à queue d'aronde en glissant axialement les arceaux dans les mortaises 60 (figure 1).

Après avoir mis en place les conduits 19 et les bobines 7, on procède, avec une matière plastique 18, à un surmoulage de la couronne statorique 40 ainsi équipée et limitée par les faces latérales 44, ainsi qu'à un surmoulage de la couronne rotorique 41 également équipée d'arceaux composites 16 et limitée par des faces latérales 45 (seul l'élément rotorique 3 est représenté surmoulé). Les couronnes peuvent être tronçonnées dans un profilé.

Les arceaux ayant des cotes relativement peu précises, pour que les surfaces d'entrefers soient positionnées avec précision, l'assemblage à queues d'aronde est fait avec un certain degré de liberté et pendant l'opération de surmoulage le positionnement des surfaces d'entrefers est obtenu par une attraction magnétique desdites surfaces au moyen d'un agencement convenable de la partie en vis-à-vis du moule de surmoulage, cette partie comportant des pôles ayant chacun exactement la position d'une surface d'entrefer et étant chacun relié à un aimant permanent ou à un électro-aimant.

Dans la machine décrite dans les figures 1 à 3, au lieu d'avoir un seul aimant permanent 42 à aimantation axiale **Z** par arceau 16, on peut mettre deux aimants permanents 46 et 46b à aimantation radiale **Y** en forme de tuile dont une première face joue directement le rôle de surface d'entrefer et dont la deuxième face est reliée par une barre magnétique 47 à la surface homologue de l'aimant permanent à même calage angulaire **X** comme représenté sur la figure 4, en constituant l'équivalent d'un arceau rotorique 16 en face d'un arceau statorique 14. Sur les figures 1 et 3, il suffit de remplacer les pièces 16/a,42 et 16/b par l'ensemble 46,47 et 46b de la figure 4.

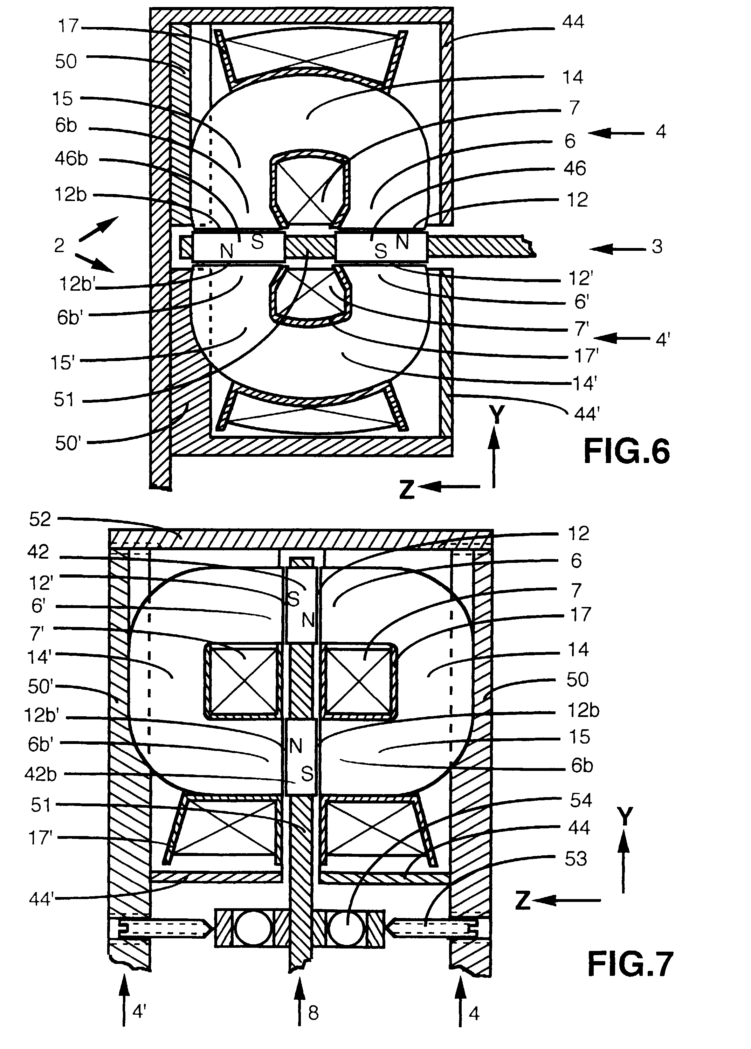

Les inductions qu'on peut obtenir sur une surface d'aimant permanent sont moins élevées que celles qu'on peut avoir avec du fer, et avec des entrefers moins précis. On peut cependant rectifier le rotor après surmoulage et la diminution de l'induction peut être compensée par une augmentation de la surface polaire d'un aimant permanent ainsi que celle d'un pôle 6 comme on le verra sur la figure 6. Les flux de fuite sont par ailleurs plus faibles qu'avec des pièces polaires.

Les pièces 16/a,16/b et 47 peuvent être feuilletées avec des tôles jusqu'à dix fois plus épaisses que celles des arceaux 14 du fait des variations de flux plus faibles et unidirectionnelles. En particulier la barre 47 est ici constituée par des tôles planes 48 empilées dans la direction **X**, emprisonnant la deuxième face des aimants permanents 46 et 46b. Chaque tôle d'extrémité 48b de l'empilage est plus courte au niveau de la couronne 41 et la tôle suivante 48c est cambrée dans l'espace ainsi libre pour former une queue d'aronde capable d'être engagée dans la mortaise 60 de la couronne 41 (figure 1).

Sur la figure 4, on a également partiellement représenté un arceau statorique 14b/1 axialement voisin de l'arceau 14/1 avec leur courant commun d'excitation i ainsi qu'un arceau statorique 14/30 angulairement voisin avec son arceau rotorique 16/40.

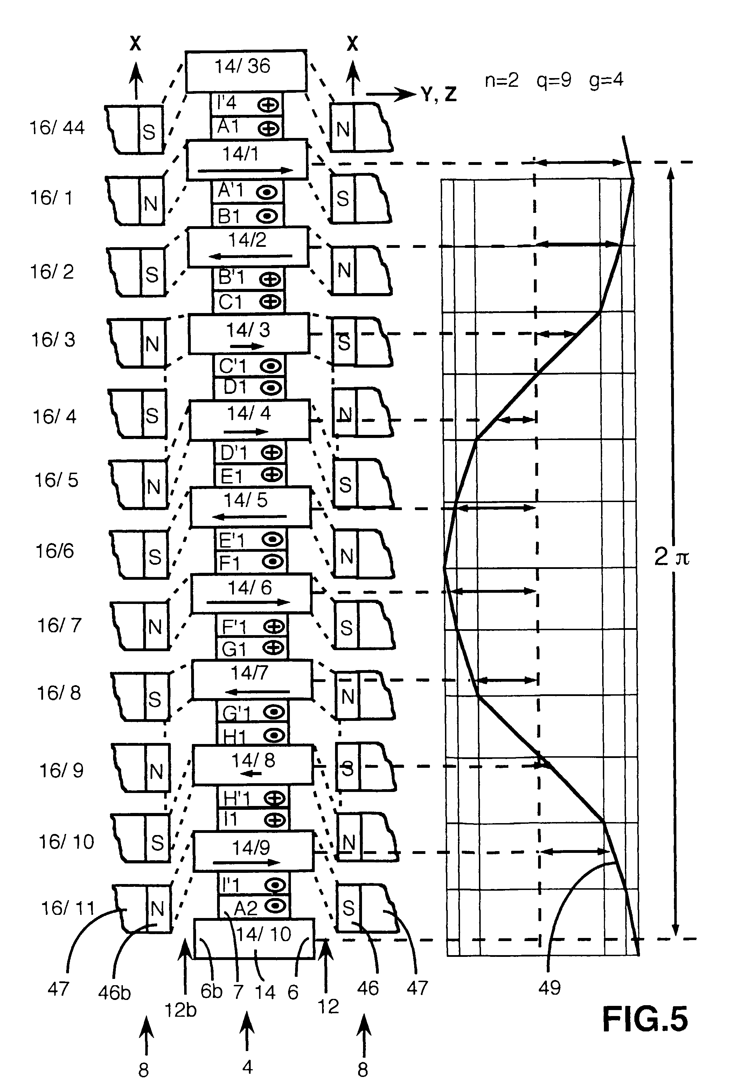

La figure 5 permet de comprendre le fonctionnement en moteur d'une telle machine, dans la disposition à aimantation radiale. Pour illustrer un cas où **q** est impair, on a choisi **q**=9 **g**=4 et **n**=2. On a représenté un peu plus qu'un groupe d'arceaux 14, de 14/36 à 14/10 séparés par les rangées d'entrefers 12 et 12b d'aimants permanents 46 et 46b constituant les pôles de 16/44 à 16/11.

La courbure dans la direction **X** des rangées d'entrefers a été redressée pour être rectiligne et les boucles des circuits magnétiques élémentaires d'arceaux ont été chacune fictivement sectionnée au niveau des barres 47 et également redressée de part et d'autre du fond des arceaux 14 de manière à confondre les directions **Y** et **Z**.

Un point ou une croix dans un cercle indiquent le sens de bobinage 7 dans les sections de bobines I'4,A1,A'1...I'1 et A2 et les lettres N et S indiquent les polarités des surfaces des aimants permanents 46 et 46b.

On a également tracé entre 14/1 et 14/10 la courbe 49 de la forme d'onde d'une période du courant de la phase A ayant ici une forme trapézoïdale à 12 rampes avec leur maillage. Chaque rampe occupe un angle électrique identique de façon à avoir à chaque instant une somme nulle de tous les courants instantanés, ce qui facilite la réalisation de l'alimentation électronique. La pente de la rampe au voisinage de l'inversion de courant est plus forte que celle qu'on aurait eue avec une onde sinusoïdale de même amplitude de crête.

Des flèches représentent l'amplitude (relevée sur la courbe 49) et le sens des ampèretours dans chaque arceau 14 à l'instant où le rotor a la position représentée et des lignes de flux ont été tracées symboliquement dans les entrefers élargis, montrant le sens des forces d'attraction. Bien entendu, ces lignes se referment en dehors de la figure entre les extrémités sectionnées des barres 47.

Lorsqu'un aimant permanent se trouve au voisinage d'un pôle statorique de même polarité (cas des pôles 16/4 et 16/9), on remarque que le flux de l'aimant peut être transféré transversalement vers les arceaux rotoriques voisins en évitant d'avoir des forces d'attraction antagonistes dans des entrefers en train de s'ouvrir. Il est aussi souhaitable d'éviter que le flux d'un aimant permanent ne puisse se boucler à certains instants que par des réluctances d'air.

C'est pour favoriser ce transfert rapide qu'on a une forte pente de l'onde 49 et qu'on a fixé la longueur de l'arc 11 à au moins le creux de denture statorique. Cette condition est difficile à obtenir avec **n** négatif ou avec **q** trop petit. De plus, avec **q** au moins égal à 6, les lignes de force dans un entrefer sont plus courtes.

Le fonctionnement de la machine est donc semblable à celui d'une machine synchrone dans lequel la composition vectorielle du champ tournant est remplacée par une composition discrète, procurant par ailleurs les avantages suivants:

Fonctionnement pas-à-pas indexable avec couple à l'arrêt sans excitation. Tôles minces (jusqu'à 0,05mm) enroulées, à grains orientés dans la direction du flux, circuit court et arrondi sans joint, pertes de matière négligeables. Tôles abordant un entrefer chacune progressivement et toutes simultanément. Entrefers à faible allongement minimisant l'effet des franges périphériques, augmentant les ampèretours et diminuant le poids de cuivre à section de fer constante, pas de dérivation de flux vers d'autres phases. Bobinage sur carcasse, réfrigération. Assemblage par surmoulage. Double modularité. Pas d'outillage de découpe.

Sur la figure 6 concernant la deuxième structure à mouvement de rotation, on a représenté symboliquement (sans les surmoulages) un stator 2 constitué par deux circuits magnétiques statoriques 4 et 4' symétriques et concentriques par rapport à une direction axiale **Z**, les arceaux de chaque circuit étant fixés par un bras 15 sur un support statorique 50,50' en forme de disque radialement mortaisé, les pôles 6 et 6' se faisant face dans une direction radiale **Y**. L'élément rotorique 3 est situé entre ces circuits 4 et 4' et est constitué par un support rotorique 51 en forme de couronne tournant autour d'un axe de direction **Z** et emprisonnant des aimants permanents 46 et 46b en forme de tuile ayant une aimantation de direction radiale **Y** de façon à ce que les deux faces polaires de chaque aimant permanent jouent chacune le rôle d'une surface d'entrefer cylindrique avec l'un des circuits 4,4'.

Le support 51 peut être réalisé en métal léger comportant des logements fendus pour recevoir les aimants permanents avant un surmoulage.

Au lieu d'avoir une forme en **U** à bras parallèles, les arceaux statoriques 14 et 14' ont ici une forme en **C** avec des pôles 6,6b rapprochés. Du fait du sectionnement oblique par rapport au plan des tôles, les surfaces d'entrefers sont augmentées. Cela permet de compenser la relativement plus faible induction des aimants permanents. La force tangentielle est aussi proportionnelle à la longueur des bords d'attaque des surfaces d'entrefers.

La carcasse de bobine 17 est alors réalisée en deux parties symétriques et le bobinage est effectué d'une manière connue à amenée de fil tournante sur un ensemble noyau-bobine non-tournant mais oscillant ici autour de l'axe de symétrie des surfaces d'entrefers de façon à bien remplir le centre de la forme en **C**.

Un circuit magnétique élémentaire comporte donc quatre entrefers 12,12b,12' et 12b' en série, de forme cylindrique et l'inertie du rotor 3 est réduite, ce qui est intéressant en robotique.

Les moyens de roulement doivent être reportés latéralement. L'élément statorique 2 peut comporter un deuxième ensemble de circuits 4,4' symétrique du premier, l'élément rotorique 3 ayant alors une forme en **T** comme sur la figure 5 du EP A 0553582 dont la structure est cependant différente.

La troisième structure est représentée sur la figure 7: deux circuits magnétiques statoriques symétriques 4 et 4' sont disposés perpendiculairement à une direction axiale **Z**, les arceaux 14 de chaque circuit étant fixés par leur fond sur des supports statoriques 50,50' en forme de disque radialement mortaisé, les bras 15 d'un arceau étant ainsi alignés dans une direction **Y** qui est radiale. Les pôles statoriques 6,6' se font face dans la direction **Z**. L'élément rotorique 3 est situé entre ces circuits 4 et 4' et est constitué par un support rotorique 51 en forme de disque tournant autour d'un axe de direction **Z** et emprisonnant des aimants parallélépipédiques 42 et 42b ayant une aimantation de direction axiale **Z** de façon à ce que les deux faces de chaque aimant permanent jouent chacune le rôle d'une surface d'entrefer plane avec l'un des circuits 4,4', la machine étant ainsi radialement hétéropolaire.

Avec des entrefers plans, il faut prévoir des moyens de réglage des entrefers en tenant compte des forces d'attractions axiales. Pour ajuster l'écartement des circuits 4 et 4',compte tenu des tolérances d'épaisseur des aimants permanents, on a prévu une culasse 52 ayant à ses extrémités intérieures des taraudages à pas inversés s'engageant sur la périphérie filetée des disques statoriques 50,50'. Après avoir annulé les entrefers par vissage de la culasse 52, une rotation déterminée en sens inverse fixe la somme des entrefers. Prenant appui sur les disques 50,50', des butées réglables 53 telles que des vis agissent sur des roulements à butée 54 enserrant le disque rotorique 51 monté à coulisse en permettant de répartir d'une manière égale cette somme sur chaque plan d'entrefer.

Si nécessaire, on peut disposer un autre ensemble 53,54 de butées et roulements à l'extérieur des arceaux 14,14'.

On peut d'autre part considérer que la figure 7 représente aussi la quatrième structure dans laquelle le support rotorique 51 est un curseur en forme de barre rectiligne se déplaçant par translation dans la direction **X** sur une course limitée, le mouvement rotorique pouvant à la limite être considéré comme un mouvement de translation. Les supports statoriques 50,50' sont alors aussi des barres rectilignes portant chacune au moins un groupe **g** d'arceaux statoriques hétérophasés.

Dans une application en traction, une machine à rotor extérieur peut être logée dans le moyeu d'une roue d'un véhicule à propulsion électrique.

La figure 8 représente une autre application de la machine à un véhicule à propulsion mixte: On a représenté un moteur thermique 30 relié à un premier plateau mobile 31 d'un embrayage 32 dont le deuxième plateau 33 est relié à une boite de vitesse 34 actionnant elle-même les roues motrices du véhicule.

Une machine 1 rotative suivant l'invention à rotor intérieur au stator a son circuit magnétique rotorique 8 fixé sur la périphérie du deuxième plateau 33 de l'embrayage 32. Cette machine remplit les fonctions suivantes:
Démarrage du moteur thermique, recharge des accumulateurs, propulsion urbaine électrique, freinage à récupération d'énergie, augmentation de l'accélération à moteur thermique, marche arrière électrique et recharge des accumulateurs au domicile. On a donc un fonctionnement hybride parallèle.

L'implantation de cette machine sur un véhicule peut se faire sans augmentation de la longueur d'arbre de l'ensemble propulseur et sans adjonction d'un autre organe de transmission, en utilisant les moyens de roulement de l'embrayage.

Un deuxième ensemble modulaire axialement décalé peut être décalé angulairement et électriquement en fonctionnement moteur de façon à lisser la courbe globale du couple. Ce deuxième ensemble peut aussi être alimenté séparément de façon à augmenter la sécurité de fonctionnement.

Sur la figure 9, un circuit magnétique statorique commun 4 actionne deux demi-circuits magnétiques rotoriques 8a et 8b formant deux ensembles moteurs 70a 70b munis chacun d'un arbre 71a 71b. Ces arbres peuvent être liés entre eux par un dispositif de secours 72.

Chaque arbre peut ainsi entraîner une roue d'un véhicule. Certains arceaux statoriques peuvent être supprimés pour abaisser le plancher du véhicule.

Pour procéder au calcul et à l'optimisation des performances des machines axialement homopolaires dans lesquelles les flux sont situés dans un plan unique contenant la direction **X** et perpendiculaire à la direction **Z**, on peut utiliser un logiciel permettant de calculer et de représenter des grandeurs magnétiques au moyen d'un maillage d'un circuit magnétique représenté sur une figure plane en faisant varier différents paramètres magnétiques et dimensionnels, dont le déplacement **X**.

Dans une machine suivant l'invention, comme la direction **X** du déplacement est perpendiculaire aux lignes de flux qui elles mêmes ne sont pas situées dans un même plan, il faudrait utiliser un logiciel travaillant dans trois dimensions, dont l'emploi est difficile et onéreux.

Sur la figure 5, on a sectionné fictivement et on a redressé la courbure de quelques circuits magnétiques élémentaires voisins comprenant chacun au moins un arceau, un aimant permanent avec ses pièces de liaison magnétique et un entrefer.

Si de plus on réunit fictivement avec une réluctance nulle les extrémités sectionnées homologues de chaque circuit élémentaire, cette représentation plane permet de procéder au calcul et à l'optimisation de la machine en utilisant simplement un logiciel à deux dimensions.

Bien entendu, des modifications peuvent être apportées aux descriptions ci-dessus sans sortir du domaine revendiqué.

A titre d'exemples, la surface polaire d'un aimant permanent 42 peut être augmentée en inclinant son axe par rapport à la direction axiale **Z**.

Avec un mouvement d'amplitude limitée, le premier organe 2 peut se déplacer par rapport au deuxième 3.

Un effet dit de skewing peut être obtenu avec un pas de pôles légèrement irrégulier mais en moyenne constant.

## Revendications

1. Machine dynamo-électrique polyphasée a réluctance variable (1), telle qu'un moteur ou un générateur, constituée par un organe statorique (2) et un organe mobile (3) se déplaçant l'un par rapport à l'autre selon une direction de déplacement **X**, un premier (2) de ces organes (2,3) comprenant au moins un premier circuit magnétique (4) comportant au moins un groupe de **q** arceaux (14) qui sont disposés dans des plans transversaux à la direction de déplacement **X**, se succèdent dans la direction de déplacement **X** et ont chacun deux bras (15) terminés par deux premiers pôles (6,6b) saillants à pas constant excités par des bobines (7), le second (3) des organes (2,3) comprenant un second circuit magnétique (8) comportant des seconds pôles (11,11b) à pas constant définissant avec les premiers pôles (6,6b) deux rangées (12,12b) d'entrefers, **caractérisée** en ce que chaque arceau (14) est excité en double alternance par une bobine (7) avec un déphasage de **π+2π/q** relativement à un arceau immédiatement précédent le long de la direction de déplacement **X**, en ce que l'un au moins des nombres **q** d'arceaux par groupe et **g** de groupes d'arceaux ainsi hétérophasés est pair, en ce que le rapport entre les pas des premiers (6) et seconds pôles (11) est égal à l'unité augmenté d'un nombre pair **n** lui même divisé par le nombre **q** de phases, soit **1+n/q** et en ce que des aimants permanents (42,46) polarisent avec des polarités magnétiques opposées chaque pôle d'une paire de seconds pôles (11,11b) ayant une même cote dans la direction de déplacement **X**, les polarités magnétiques de deux seconds pôles (11) voisins d'une même rangée d'entrefers (12) étant également opposées.

2. Machine selon la revendication 1, caractérisée en ce que le nombre **n** est positif et égal à 2.

3. Machine selon la revendication 1 ou 2, caractérisée en ce que chaque second pôle (11) a dans la direction de déplacement **X** une longueur au moins égale à celle d'un creux de denture entre deux premiers pôles (6) de façon à faciliter pour certaines positions angulaires des deux organes l'un par rapport à l'autre un transfert de flux dans la direction de déplacement **X** entre éléments de circuits magnétiques voisins.

4. Machine selon l'une quelconque des revendications 1 à 3, caractérisée en ce que des bras (15) voisins de deux arceaux (14,14b) ayant même cote dans la direction de déplacement **X** sont entourés par une même bobine (7) de façon à former des circuits magnétiques élémentaires en forme de **E**.

5. Machine selon l'une quelconque des revendications 1 à 4, caractérisée en ce que des conduits (19) traversent le premier circuit magnétique (4) chacun à proximité de l'une au moins des bobines (7) de façon à permettre la circulation d'un gaz ou d'un liquide de réfrigération.

6. Machine selon l'ensemble des revendications 4 et 5, caractérisée en ce que chaque conduit (19) est constitué par un assemblage de deux demi-coquilles (43,43b) symétriques et en ce que le parcours de ce conduit (19) s'étend globalement dans un plan transversal à la direction de déplacement **X** et comprend, entre deux extrémités voisines chacune d'une rangée d'entrefers respective, au moins un lobe (59) contournant au moins une bobine respective par le coté de cette bobine qui est opposé aux rangées d'entrefers.

7. Machine selon l'une des revendications 1 à 6, caractérisée en ce que les aimants permanents (42) ont une direction d'aimantation sensiblement parallèle à une direction **Z** selon laquelle se succèdent les rangées d'entrefers et en ce que les surfaces polaires des aimants sont recouvertes par des pièces polaires (16/a,16/b) en forme de demi-arceau.

8. Machine selon l'une des revendications 1 à 6, caractérisée en ce que les aimants permanents (46) ont une direction d'aimantation transversale à la direction de déplacement **X** et à une direction **Z** selon laquelle se succèdent les rangées d'entrefers et ont une forme en tuile dont une face avant joue le rôle de deuxième pôle.

9. Machine selon la revendication 8, caractérisée en ce que la face arrière de chaque aimant permanent (46) est reliée par une barre magnétique (47) à la face arrière de l'aimant permanent (46b) ayant même cote dans la direction de déplacement **X**.

10. Machine selon la revendication 9, caractérisée en ce que la barre magnétique (47) est constituée par des tôles planes épaisses (48) empilées dans la direction de déplacement **X** qui emprisonnent la face arrière des aimants permanents (46,46b), en ce que chaque tôle d'extrémité (48b) de l'empilage est raccourcie du côté opposé aux aimants permanents et en ce que la tôle suivante est cambrée dans l'espace ainsi libre pour former une queue d'aronde par laquelle la barre magnétique est retenue dans une mortaise (41) du deuxième organe (3).

11. Machine selon l'une quelconque des revendications précédentes, caractérisée en ce que les deux organes (2,3) se déplacent l'un par rapport à l'autre par rotation autour d'une deuxième direction **Z** qui est axiale et orthogonale à la direction de déplacement **X**, en ce que les premiers et seconds pôles (6,6b,11,11b) sont saillants dans une troisième direction **Y** qui est radiale et orthogonale aux deux autres directions, en ce que les rangées (12,12b) d'entrefers ont une forme cylindrique et sont espacées selon la deuxième direction **Z**, la machine étant ainsi axialement hétéropolaire.

12. Machine selon la revendication 11, dans laquelle l'organe mobile (3) est intérieur à l'organe statorique (2), caractérisée en ce que le second circuit magnétique (8) est fixé sur un embrayage (32) à deux plateaux (31,33) accouplant un moteur thermique (30) à une boite de vitesse (34) d'un véhicule à moteur thermique, à la périphérie du plateau (33) de l'embrayage (32) relié à la boite de vitesse (34).

13. Machine selon l'une quelconque des revendications 1 à 6, caractérisée en ce que le premier organe (2) comprend deux premiers circuits magnétiques (4,4'), chaque rangée de premiers pôles (6,6b-6',6b') de l'un des premiers circuits magnétiques (4) faisant face à une rangée de premiers pôles de l'autre premier circuit magnétique (4') selon une direction interpolaire **Y**;**Z**, transversale à la direction de déplacement **X**, en ce que le second circuit magnétique comprend deux rangées d'aimants permanents (46,46b) disposées chacune entre l'une respective des deux rangées de paires de premiers pôles qui se font face, et en ce que les deux faces polaires de chaque aimant permanent (42,42b;46,46b) constituent chacune un second pôle face à une rangée de premiers pôles de l'un des premiers circuits magnétiques.

14. Machine selon la revendication 13, caractérisée en ce que le premier (2) et le deuxième (3) organe sont rotatifs l'un par rapport à l'autre autour d'un axe **Z** transversal à la direction interpolaire **Y**, sensiblement radiale, et en ce que le deuxième organe (3) comprend un support en forme de couronne (51) emprisonnant les aimants permanents (46,46b) en forme de tuile ayant une aimantation sensiblement radiale **Y**.

15. Machine selon la revendication 13, caractérisée en ce que le premier (2) et le deuxième (3) organe sont rotatifs l'un par rapport à l'autre autour d'un axe **Z** sensiblement parallèle à la direction interpolaire **Z**, et en ce que le deuxième organe (3) comprend un support (51) en forme de disque emprisonnant les aimants permanents (42,42b) sensiblement parallélépipédiques.

16. Machine selon la revendication 15, caractérisée en ce que le premier organe comprend un support en forme générale de disque (50,50') pour chaque premier circuit magnétique (4,4'), en ce qu'une culasse (52) comporte à ses extrémités intérieures des taraudages à pas inversés qui s'engagent sur la périphérie filetée des supports (50,50') en forme générale de disque et en ce que des butées réglables (53) prenant appui sur les supports (50,50') agissent sur des roulements à butée (54) qui enserrent le support (51) emprisonnant les aimants permanents.

17. Machine selon la revendication 13, fonctionnant en moteur linéaire, caractérisée en ce que la direction de déplacement **X** est rectiligne.

18. Machine fonctionnant en moteur, selon l'une quelconque des revendications précédentes, caractérisée en ce que la double alternance du courant d'alimentation a une onde (49) de forme trapézoïdale à plusieurs rampes, en ce que les rampes occupent chacune un même angle électrique et en ce qu'au voisinage de l'inversion de courant la pente est plus forte que celle qu'on aurait eue avec une onde sinusoïdale de même amplitude de crête.

19. Machine selon l'une quelconque des revendications précédentes, dans laquelle le bobinage est effectué à amenée de fil tournante sur le fond d'un arceau (14), caractérisée en ce que les arceaux (14) ont une forme en **C** avec des premiers pôles (6,6b) rapprochés de façon à augmenter les surfaces d'entrefers des arceaux.

20. Machine selon l'une quelconque des revendications précédentes, caractérisée en ce que le déphasage de **π+2π/q** entre les excitations de deux arceaux (14) voisins est réalisé en cumulant un déphasage électrique entre phases voisines avec un déphasage de π obtenu par l'inversion du sens de bobinage de chaque bobine (7) par rapport aux deux bobines (7) qui lui sont voisines le long de la direction de déplacement **X**.

21. Machine selon l'une quelconque des revendications précédentes, dans laquelle les deux organes (2,3) se déplacent l'un par rapport à l'autre par rotation, caractérisée en ce qu'elle comporte deux demi-circuits magnétiques rotoriques (8a,8b) munis chacun d'un demi-arbre (71a,71b).

22. Procédé pour la réalisation d'une machine selon l'une quelconque des revendications précédentes, machine dans laquelle les arceaux sont maintenus par une opération de surmoulage dans au moins un support, caractérisé en ce que le positionnement des surfaces d'entrefers est obtenu par une attraction magnétique desdites surfaces au moyen d'un agencement convenable de la partie du moule située en vis-à-vis des surfaces d'entrefers.

23. Procédé pour calculer et optimiser les performances d'une machine selon l'une quelconque des revendications précédentes, utilisant un logiciel à deux dimensions permettant de calculer et de représenter des grandeurs magnétiques au moyen d'un maillage d'un circuit magnétique représenté sur une figure plane, caractérisé en ce que ladite figure plane est obtenue par sectionnement fictif et par redressement, dans un plan, de la courbure de quelques circuits magnétiques élémentaires voisins de la machine, comprenant chacun au moins un arceau statorique, un aimant permanent avec ses pièces de liaison magnétique et un entrefer et en ce que les extrémités sectionnées homologues de chaque circuit magnétique élémentaire sont réunies fictivement par une liaison à réluctance nulle.

## Patentansprüche

1. Vielphasige dynamo-elektrische Maschine mit variabler Reluktanz (1), wie zum Beispiel ein Motor oder ein Generator, die aus einem stehenden Mittel (2) und einem bewegbaren Mittel (3), die sich in einer Verschiebungsrichtung **X** gegeneinander verschieben, zusammengesetzt ist, wobei ein erstes (2) dieser Mittel (2, 3) wenigstens einen ersten magnetischen Kreis (4) mit wenigstens einer Gruppe von **q** Bögen (14) umfasst, die in zur Verschiebungsrichtung **X** querliegenden Ebenen angeordnet sind, in der Verschiebungsrichtung **X** aufeinander folgen und jeweils zwei Arme (15) aufweisen, die in zwei ersten, mit gleichbleibender Teilung hervorstehenden und über Spulen (7) erregten Polen (6, 6b) enden, das zweite (3) der Mittel (2, 3) einen zweiten magnetischen Kreis (8) mit zweiten Polen (11, 11b) mit gleichbleibender Teilung umfasst, welche mit den ersten Polen (6, 6b) zwei Luftspaltenreihen (12, 12b) bilden,
**dadurch gekennzeichnet, dass** jeder Bogen (14) mit beiden Polaritäten der Halbwellen durch eine Spule (7) mit einer Phasenverschiebung um **Π+2Π/q** relativ zu einem längs der Verschiebungsrichtung **X** unmittelbar vorausgehenden Bogen erregt wird, dass wenigstens eine der Zahlen **q** der Bögen pro Gruppe und **g** der Gruppen der derart heterophasigen Bögen geradzahlig ist, dass das Verhältnis zwischen den Teilungen der ersten (6) und zweiten Pole (11) gleich Eins erhöht um eine gerade Zahl **n**, welche ihrerseits durch die Zahl **q** der Phasen geteilt wird, ist und somit **1+n/q** beträgt, und dass Permanentmagnete (42, 46) mit entgegengesetzten magnetischen Polaritäten jeden Pol eines Paars der zweiten Pole (11, 11b) mit gleicher Position bezüglich der Verschiebungsrichtung **X** polarisieren, und die magnetischen Polaritäten von zwei benachbarten Polen (11) einer gleichen Luftspaltenreihe (12) ebenfalls entgegengesetzt sind.

2. Maschine nach Anspruch 1,
**dadurch gekennzeichnet, dass** die Zahl n positiv und gleich 2 ist.

3. Maschine nach Anspruch 1 oder 2,
**dadurch gekennzeichnet, dass** jeder zweite Pol (11) in der Verschiebungsrichtung **X** eine Länge hat, die der Länge einer Lücke der Zahnung zwischen zwei ersten Polen (6) wenigstens gleich ist, um so für bestimmte Winkelstellungen der beiden Mittel zueinander eine Flussübertragung in der Verschiebungsrichtung **X** zwischen Elementen benachbarter magnetischer Kreise zu erleichtern.

4. Maschine nach einem der Ansprüche 1 bis 3,
**dadurch gekennzeichnet, dass** benachbarte Arme (15) zweier Bögen (14, 14b) mit gleicher Position bezüglich der Verschiebungsrichtung **X** von einer gleichen Spule (7) umgeben sind, um so elementare magnetische Kreise in Form eines **E** zu bilden.

5. Maschine nach einem der Ansprüche 1 bis 4,
**dadurch gekennzeichnet, dass** Rohrleitungen (19) den ersten magnetischen Kreis (4) jeweils nahe wenigstens einer der Spulen (7) durchqueren, um so den Umlauf eines Kühlgases oder einer Kühlflüssigkeit zu ermöglichen.

6. Maschine entsprechend der Gesamtheit der Ansprüche 4 und 5,
**dadurch gekennzeichnet, dass** jede Rohrleitung (19) durch Aneinanderfügen von zwei symmetrischen Halbschalen (43, 43b) gebildet ist, und dass sich der Weg dieser Rohrleitung (19) insgesamt in einer zur Verschiebungsrichtung **X** querliegenden Ebene erstreckt und zwischen zwei jeweils an einer entsprechenden Luftspaltenreihe angrenzenden Enden wenigstens einen Bogen (59) umfasst, der jeweils wenigstens eine Spule auf der den Luftspaltenreihen engegengesetzten Seite dieser Spule umgibt.

7. Maschine nach einem der Ansprüche 1 bis 6,
**dadurch gekennzeichnet, dass** die Permanentmagnete (42) eine Magnetisierungsrichtung haben, die zu einer Richtung **Z**, in der die Luftspaltenreihen aufeinander folgen, im wesentlichen parallel ist, und dass die Polflächen der Magnete von Polstücken (16/a, 16/b) in Form von Halbbögen verdeckt sind.

8. Maschine nach einem der Ansprüche 1 bis 6,
**dadurch gekennzeichnet, dass** die Permanentmagnete (46) eine Magnetisierungsrichtung haben, die zur Verschiebungsrichtung **X** und zu einer Richtung **Z**, in der die Luftspaltenreihen aufeinander folgen, querliegend ist und eine Ziegelform haben, deren eine Vorderseite die Rolle des zweiten Pols spielt.

9. Maschine nach Anspruch 8,
**dadurch gekennzeichnet, dass** die Hinterseite jedes Permanentmagneten (46) durch eine magnetische Stange (47) mit der Hinterseite des Permanentmagneten (46b), der die gleiche Position bezüglich der Verschiebungsrichtung **X** aufweist, verbunden ist.

10. Maschine nach Anspruch 9,
**dadurch gekennzeichnet, dass** die magnetische Stange (47) von dickwandigen, ebenen, in der Verschiebungsrichtung **X** geschichteten Blechen gebildet ist, die die Hinterseite der Permanentmagnete (46, 46b) umklammern, dass jedes Endblech (48b) der Schichtung auf der den Permanentmagneten entgegengesetzten Seite verkürzt ist, und dass das folgende Blech in den so freien Raum gebogen ist, um eine Zinke zu bilden, durch welche die magnetische Stange in einem Einschnitt (41) des zweiten Mittels (3) zurückgehalten ist.

11. Maschine nach einem der vorhergehenden Ansprüche,
**dadurch gekennzeichnet, dass** sich die beiden Mittel (2, 3) durch Drehung um eine zweite Richtung **Z**, die axial und senkrecht zur Verschiebungsrichtung **X** ist, gegeneinander verschieben, und dass die ersten und zweiten Pole (6, 6b, 11, 11b) in einer dritten Richtung **Y**, die radial und senkrecht zu den beiden anderen Richtungen ist, hervorstehen, dass die Luftspaltenreihen (12, 12b) eine zylindrische Form haben und entlang der zweiten Richtung **Z** beabstandet sind, und die Maschine so axial heteropolar ist.

12. Maschine nach Anspruch 11, bei welcher sich das bewegbare Mittel (3) innerhalb des stehenden Mittels (2) befindet,
**dadurch gekennzeichnet, dass** der zweite magnetische Kreis (8) auf einer ausrückbaren Kupplung (32) mit zwei Platten (31, 33), die einen Verbrennungsmotor (30) mit einem Getriebe (34) eines Fahrzeugs mit Verbrennungsmotor kuppeln, am Umfang der mit dem Getriebe (34) verbundenen Platte (33) der ausrückbaren Kupplung (32) befestigt ist.

13. Maschine nach einem der Ansprüche 1 bis 6,
**dadurch gekennzeichnet, dass** das erste Mittel (2) zwei erste magnetische Kreise (4, 4') umfasst, wobei jede Reihe der ersten Pole (6, 6b-6', 6b') von einem der ersten magnetischen Kreise (4) einer Reihe der ersten Pole des anderen ersten magnetischen Kreises (4') entlang einer zwischenpoligen Richtung **Y**; **Z**, querliegend zur Verschiebungsrichtung **X** gegenüber liegt, dass der zweite magnetische Kreis zwei Reihen von Permanentmagneten (46, 46b) umfasst, von denen jede zwischen jeweils einer der beiden sich gegenüberliegenden Reihen von Paaren der ersten Pole angeordnet sind, und dass die beiden Polseiten jedes Permanentmagneten (42, 42b, 46, 46b) jeweils eine zweite Polseite bilden, die einer Reihe von ersten Polen von einem der ersten magnetischen Kreise gegenüberliegt.

14. Maschine nach Anspruch 13,
**dadurch gekennzeichnet, dass** das erste (2) und das zweite (3) Mittel um eine zur im wesentlichen radialen zwischenpoligen Richtung **Y** querliegenden Achse **Z** gegeneinander drehbar sind, und dass das zweite Mittel (3) einen Träger in Form eines Kranzes (51) umfasst, der die ziegelförmigen Permanentmagnete (46, 46b) mit einer im wesentlichen radialen **Y** Magnetisierung umklammert.

15. Maschine nach Anspruch 13,
**dadurch gekennzeichnet, dass** das erste (2) und das zweite (3) Mittel um eine zur zwischenpoligen Richtung **Z** im wesentlichen parallelen Achse **Z** gegeneinander drehbar sind, und dass das zweite Mittel (3) einen Träger (51) in Form einer Scheibe umfasst, der die im wesentlichen spatförmigen Permanentmagnete (42, 42b) umklammert.

16. Maschine nach Anspruch 15,
**dadurch gekennzeichnet, dass** das erste Mittel für jeden ersten magnetischen Kreis (4, 4') einen Träger in der allgemeinen Form einer Scheibe (50, 50') umfasst, dass ein Joch (52) an seine inneren Enden Innengewinde mit umgekehrten Gangrichtungen aufweist, die auf den gewindeten Umfang der Träger (50, 50') in der allgemeinen Form von Scheiben eingreifen, und dass einstellbare Anschläge (53) zur Anlage auf den Trägern (50, 50') kommen, welche auf Drucklager (54) wirken, die den die Permanentmagnete umklammernden Träger (51) umschliessen.

17. Maschine nach Anspruch 13, welche als Linearmotor funktioniert,
**dadurch gekennzeichnet, dass** die Verschiebungsrichtung **X** geradlinig ist.

18. Maschine, welche als Motor funktioniert, nach einem der vorhergehenden Ansprüche,
**dadurch gekennzeichnet, dass** die beiden Polaritäten der Halbwellen des Versorgungsstroms eine trapezförmige Welle (49) mit mehreren Rampen bilden, dass die Rampen jeweils einen gleichen elektrischen Winkel belegen, und dass in der Nähe der Stromumkehr die Neigung stärker ist als jene, die man mit einer sinusförmigen Welle der gleichen Spitzenamplitude gehabt hätte.

19. Maschine nach einem der vorhergehenden Ansprüche, bei welcher die Wicklung mit drehender Zuführung des Wickeldrahts auf den Boden eines Bogens (14) erfolgt,
**dadurch gekennzeichnet, dass** die Bögen (14) eine Form eines **C** mit ersten angenäherten Polen (6, 6b) haben, um so die Flächen der Luftspalten der Bögen zu erhöhen.

20. Maschine nach einem der vorhergehenden Ansprüche,
**dadurch gekennzeichnet, dass** die Phasenverschiebung von Π+**2**Π/**q** zwischen den Erregungen von zwei angrenzenden Bögen (14) erfolgt, indem eine elektrische Phasenverschiebung zwischen angrenzenden Phasen mit einer durch Umkehrung der Wicklungsrichtung jeder Spule (7) bezüglich der beiden an diese längs der Verschiebungsrichtung **X** angrenzenden Spulen (7) erhaltenen Phasenverschiebung von Π kumuliert ist.

21. Maschine nach einem der vorhergehenden Ansprüche, bei welcher sich die beiden Mittel (2, 3) durch Rotation gegeneinander verschieben,
**dadurch gekennzeichnet, dass** sie zwei jeweils mit einer Halbwelle (71a, 71b) versehene magnetische Rotorhalbkreise (8a, 8b) aufweist.

22. Verfahren zur Herstellung einer Maschine nach einem der vorhergehenden Ansprüche, bei welcher Maschine die Bögen durch einen Vorgang der Abformung vom Gussstück in wenigstens einem Träger erhalten werden,
**dadurch gekennzeichnet, dass** die Positionierung der Flächen der Luftspalte durch eine magnetische Anziehung der genannten Flächen mittels einer passenden Stellung des gegenüber der Luftspaltenflachen befindlichen Teils der Gussform erhalten wird.

23. Verfahren zur Berechnung und Optimierung der Leistung einer Maschine nach einem der vorhergehenden Ansprüche, das eine Software mit zwei Dimensionen verwendet, die es ermöglicht, magnetische Grössen mittels eines in einer ebenen Figur dargestellten Netzwerks eines magnetischen Kreises zu berechnen und darzustellen,
**dadurch gekennzeichnet, dass** die genannte ebene Figur durch fiktives Aufschneiden und Abwickeln in einer Ebene der Krümmung von einigen benachbarten elementaren magnetischen Kreise der Maschine erhalten wird, die jeweils wenigstens einen stehenden Bogen, einen Permanentmagneten mit seinen magnetischen Verbindungsteilen und einen Luftspalt umfassen, und dass die aufgeschnittenen homologen Enden jedes elementaren magnetischen Kreises durch eine Verbindung mit verschwindender Reluktanz fiktiv zusammengefügt werden.

## Claims

1. Dynamo-electric polyphased machine with variable reluctance (1), such as a motor or a generator, made up of a stator mechanism (2) and a moveable mechanism (3) moving in relation to one another according to a direction of movement **X**, a first (2) of these mechanisms (2,3) comprising at least one first magnetic circuit (4) including at least one group of **q** arches (14) which are arranged in transverse planes to the direction of movement **X**, follow each other in the direction of movement **X** and each have two arms (15) ending in two first poles (6, 6b) protruding at constant pitch excited by reels (7), the second (3) of the mechanisms (2, 3) comprising a second magnetic circuit (8) including second poles (11, 11b) with constant pitch defining with the first poles (6, 6b) two rows (12, 12b) of gaps, **characterised** in that each arch (14) is excited in double alternation by a reel (7) with a phase displacement of Π+**2**Π/**q** in relation to an immediately preceding arch along the direction of movement **X**, in that one at least of the numbers **q** of arches by group and **g** of groups of arches thus heterophased is even, in that the ratio between the pitches of the first (6) and second poles (11) is equal to one plus an even number **n** itself divided by the number **q** of phases, i.e. : **1+n/q,** and in that permanent magnets (42,46) polarise with opposed magnetic polarities each pole of a pair of second poles (11, 11 b) having a same position along the direction of movement **X**, the magnetic polarities of two neighbouring second poles (11) of a same row of gaps (12) being also opposed.

2. Machine according to claim 1, characterised in that the number **n** is positive and equal to 2.

3. Machine according to claim 1 or 2, characterised in that each second pole (11) has in the direction of movement **X** a length at least equal to that of a cog space between two first poles (6) in order to facilitate for certain angular positions of the two mechanisms in relation to each other a flux transfer in the direction of movement **X** between elements of neighbouring magnetic circuits.

4. Machine according to any of claims 1 to 3 characterised in that the neighbouring arms (15) of two arches (14, 14b) having the same position along the direction of movement **X** are surrounded by a same reel (7) in order to form E-shaped elementary magnetic circuits.

5. Machine according to any of claims 1 to 4 characterised in that conduits (19) extend through the first magnetic circuit (4) each in proximity to at least one of the reels (7) in order to allow the circulation of a refrigeration liquid or gas.

6. Machine according to claims 4 and 5 together, characterised in that each conduit (19) is made up of an assembly of two symmetrical half shells (43, 43b) and in that the path of this conduit (19) extends globally in a transverse plane to the direction of movement **X** and comprises, between two ends, each of which neighbours a row of respective gaps, at least one lobe (59) circumventing at least one respective reel by the side of this reel which is remote from the rows of gaps.

7. Machine according to one of the claims 1 to 6, characterised in that the permanent magnets (42) have a magnetising direction approximately parallel to a direction **Z** along which the rows of gaps follow each other, and in that the polar surfaces of the magnets are covered by polar parts (16/a, 16/b) in the form of half-arches.

8. Machine according to one of claims 1 to 6, characterised in that the permanent magnets (46) have a magnetisation direction transverse to the direction of movement **X** and to a direction **Z** along which the rows of gaps follow each other and have a tile form one front face of which operates as second pole.

9. Machine according to claim 8, characterised in that the back face of each permanent magnet (46) is linked by a magnetic bar (47) to the back face of the permanent magnet (46b) having the same position along the direction of movement **X**.

10. Machine according to claim 9, characterised in that the magnetic bar (47) is made up of thick flat iron plate (48) piled up in the direction of movement **X** which confines the back face of the permanent magnets (46, 46b), in that each end iron plate (48b) of the pile is shortened on the side remote from the permanent magnets, and in that the following iron plate is curved into the space thus free to form a swallow tail by which the magnetic bar is retained in a mortise (41) of the second mechanism (3).

11. Machine according to any of the preceding claims, characterised in that the two mechanisms (2, 3) move in relation to each other by rotation around a second direction **Z** which is axial and orthogonal to the direction of movement **X**, in that the first and second poles (6, 6b, 11, 11b) protrude into a third direction **Y** which is radial and orthogonal to the two other directions, and in that the rows (12, 12b) of gaps have a cylindrical form and are spaced along the second direction **Z**, the machine being thus axially heteropolar.

12. Machine according to claim 11, in which the moveable mechanism (3) is at the interior of the stator mechanism (2), characterised in that the second magnetic circuit (8) is fixed onto a clutch (32) with two plates (31, 33) coupling a thermic motor (30) to a gear box (34) of a vehicle with a thermic motor, at the periphery of that plate (33) of the clutch (32) which is connected to the gear box (34).

13. Machine according to any of claims 1 to 6, characterised in that the first mechanism (2) comprises two first magnetic circuits (4, 4'), each row of first poles (6, 6b-6', 6b') of one of the first magnetic circuits (4) facing a row of first poles of the other first magnetic circuit (4') along an interpolar direction **Y; Z,** transverse to the direction of movement **X**, in that the second magnetic circuit comprises two rows of permanent magnets (46, 46b) each arranged between a respective one of the two rows of pairs of first poles which face each other, and in that the two polar faces of each permanent magnet (42, 42b; 46, 46b) each make up a second pole opposite a row of first poles of one of the first magnetic circuits.

14. Machine according to claim 13, characterised in that the first (2) and the second (3) mechanism are rotational in relation to each other around an axis **Z** transverse to the interpolar direction **Y**, which is substantially radial, and in that the second mechanism (3) comprises a ring-shaped support (51) confining the permanent magnets (46, 46b) in the form of a tile having an substantially radial magnetisation **Y.**

15. Machine according to claim 13, characterised in that the first (2) and the second (3) mechanism are rotational in relation to each other around an axis **Z** which is substantially parallel to the interpolar direction **Z**, and in that the second mechanism (3) comprises a disc-shaped support (51) confining the substantially parallelepipedic permanent magnets (42, 42b).

16. Machine according to claim 15, characterised in that the first mechanism comprises a generally disc-shaped support (50,50') for each first magnetic circuit (4, 4'), in that a yoke (52) includes at its interior ends inner screw threads with contrary threads which engage onto the threaded periphery of the generally disc-shaped supports (50, 50') and in that adjustable abutments (53) pressing against the supports (50, 50') act on abutment roll bearings (54) which hold the support (51) confining the permanent magnets.

17. Machine according to claim 13, operable as a linear motor, characterised in that the direction of movement **X** is rectilinear.

18. Machine operable as a motor, according to any of the preceding claims, characterised in that the double alternation of the supply current possesses a wave (49) of trapezoid form with several ramps, in that the ramps each occupy a same electric angle and in that in the neighbourhood of the inversion of the current the slope is stronger than would have been with a sinusoidal wave of the same peak amplitude.

19. Machine according to any of the preceding claims, in which the reeling is carried out by means of a rotary wire supply on the base of an arch (14), characterised in that the arches (14) are C-shaped with the first poles (6, 6b) brought closer together in such a way as to increase the surfaces of the gaps of the arches.

20. Machine according to any of the preceding claims, characterised in that the phase displacement of **Π+2Π/q** between the excitations of two neighbouring arches (14) is carried out by accumulating an electric phase displacement between neighbouring phases with a phase displacement of Π obtained by the reversal of the winding direction of each reel (7) in relation to two reels (7) which neighbour it along the direction of movement **X.**

21. Machine according to any of the preceding claims, in which the two mechanisms (2,3) move in relation to one another by rotation, characterised in that it comprises two rotor magnetic half-circuits (8a, 8b) each equipped with a half-shaft (71a, 71b).

22. Method for the manufacture of a machine according to any of the preceding claims, a machine in which the arches are supported by an operation of over moulding in at least one support, characterised in that the positioning of the gap surfaces is obtained by a magnetic attraction of said surfaces by means of a suitable organisation of the mould section situated opposite the gap surfaces.

23. Method for calculating and optimising the performances of a machine according to any of the preceding claims, using a two dimensional software allowing the calculation and representation of the magnetic strengths by means of a magnetic circuit network represented in a flat illustration, characterised in that the said flat illustration is obtained by fictitious sectioning and by straightening, in one plane, of the curvature of several neighbouring elementary magnetic circuits of the machine, each comprising at least one stator arch, a permanent magnet with its parts of magnetic link and a gap, and in that the sectioned homologous ends of each elementary magnetic circuit are fictitiously connected by a link with zero reluctance.
